# EUROPÄISCHE PATENTSCHRIFT

(11) **EP 2 328 784 B1**
(45) Veröffentlichungstag und Bekanntmachung des Hinweises auf die Patenterteilung: **25.10.2017**
(21) Anmeldenummer: 09778623.0
(22) Anmeldetag: 21.09.2009
(51) Int. Cl.: B60S 1/32, B60S 1/34, B60S 1/38, B60S 1/40, B60S 1/52

(54) **WISCHARM/WISCHBLATT-VERBINDUNG SOWIE WISCHBLATT**
WIPERBLADE-WIPERARM CONNECTION AND A WIPERBLADE
ELEMENT DE LIAISON ENTRE UN BRAS D'ESSUIE-GLACE ET UN BALAI D'ESSUIE-GLACE, ET UN BALAI D'ESSUIE-GLACE

(30) Priorität: 26.09.2008 DE 102008049269
(43) Veröffentlichungstag der Anmeldung: 08.06.2011
(73) Patentinhaber: Valeo Systèmes d'Essuyage, 78322 Le Mesnil Saint Denis (FR)
(72) Erfinder: EGNER-WALTER, Bruno, 74076 Heilbronn (DE); SCHÄUBLE, Michael, 71665 Vaihingen / Enz (DE)
(74) Vertreter: Callu Danseux, Violaine
(86) Internationale Anmeldenummer: PCT/EP2009/006790
(87) Internationale Veröffentlichungsnummer: WO 2010/034445

(56) Entgegenhaltungen:
- DE-A1-102004 056 835
- DE-A1-102005 030 972
- DE-U- 1 989 712
- GB-A- 644 048

## Beschreibung

Die Erfindung bezieht sich auf eine Wischarm/Wischblatt-Verbindung bei Scheibenwischanlagen für Fahrzeuge gemäß Oberbegriff des Patentanspruchs 1 sowie auf ein Wischblatt gemäß Oberbegriff des Patentanspruchs 14 (siehe zum Beispiel DE 10 2004 056 835 A1). Wischblätter zur Verwendung bei Scheibenwischanlagen von Fahrzeugen sind in unterschiedlichen Ausführungen bekannt. Bekannt sind insbesondere auch flache Wischblätter (aus der o.g. DE 10 2004 056 835 A1 oder aus der DE 100 00 372 A1), die generell aus einem sich in Wischblattlängsrichtung erstreckenden und eine Wischlippe bildenden Wischgummi aus einem gummielastischen Material sowie aus einem leistenartigen oder profilschienenförmigen Wischblattkörper (Wischleiste) mit wenigstens einer Federschiene bestehen, an welchem (Wischblattkörper) der Wischgummi gehalten ist. Über einen Wischblattadapter ist das jeweilige Wischblatt lösbar mit dem Wischarm der Scheibenwischanlage verbunden, wobei der jeweilige Wischblattadapter wenigstens zweiteilig ausgeführt ist, und zwar bestehend aus einem zumindest im montierten Zustand mit dem Wischarm verbundenen wischarmseitigen Adapterteil und aus einem am Wischblatt vorgesehenen wischblattseitigen Adapterteil, welches das Wischblatt bzw. dessen Wischblattkörper und/oder die Federschiene und/oder den Wischgummi an der Wischblattoberseite reiterartig übergreift. An wenigstens einer Wischblattlängsseite ist bei diesen bekannten flachen Wischblättern ein Spritz- oder Verteilerkanal mit einer Vielzahl von Düsenöffnungen zum Ausbringen einer Reinigungs- oder Waschflüssigkeit auf die Fahrzeugscheibe vorgesehen. Über einen wischblattseitigen, d.h. am Wischblattadapter vorgesehenen Fluid- oder Flüssigkeitsanschluss ist der wenigstens eine Verteiler- oder Spritzkanal an wenigstens eine äußere, in der Regel von einem Schlauch gebildete Flüssigkeitsleitung angeschlossen, über die die Reinigungs- oder Waschflüssigkeit dem Verteiler- oder Spritzkanal von einer fahrzeugseitigen Versorgungseinheit gesteuert zugeführt wird.
Bekannt sind weiterhin elektrisch beheizbare Wischblätter (JP 10329655, DE 19 89 712 U), die allerdings als Bügelwischblätter mit Bügeln oder Bügelstrukturen ausgeführt sind. Im Bereich des Wischgummis oder des den Wischgummi tragenden Wischblattkörpers (Wischleiste) ist jeweils ein von einem Heizdraht oder einer Heizfolie gebildetes elektrisches Heizelement vorgesehen. Die Zuführung des Heizstromes an das Heizelement erfolgt über wenigstens eine zumindest über eine Teillänge auch entlang des Wischarmes verlaufende elektrische Leitung, mit der das beheizbare Wischblatt dann über eine elektrische Stecker/Buchsenverbindung angeschlossen ist.

"Flache Wischblätter" werden inzwischen auch als "Flachwischblätter" oder "Flachbalkenwischblätter" oder "Gelenkfreie Wischblätter" bezeichnet. Im Sinne der vorliegenden Erfindung bestehen diese flachen Wischblätter generell aus einem Wischgummi mit einer Wischlippe, wobei der Wischgummi an einer Federschiene oder an zwei Federschienen gehalten bzw. befestigt ist und an der Federschiene oder an den Federschienen eine Anschlussvorrichtung bzw. ein Wischblattadapter zum Verbinden mit einem für die Wischbewegung antreibbaren Wischarm angebracht ist. Bei nur einer Federschiene ist diese in einem Längskanal des Wischgummis angeordnet oder auf dem Rücken des Wischgummis befestigt. Bei zwei Federschienen greifen diese in Längsnuten an den gegenüberliegenden langen Außenseiten des Wischgummis ein.
Bei einer weiteren generellen Ausbildung flacher Wischblätter ist der Wischgummi mit seinem Rückenteil in einem länglichen elastischen Profilkörper aufgenommen, ebenso eine Federschiene oder mehrere Federschienen. Wenn der Profilkörper selbst mit den erforderlichen Federeigenschaften versehen ist, kann auch auf zusätzliche Federschienen verzichtet werden. Die Anschlussvorrichtung zum Verbinden des Wischblattes mit dem Wischarm ist dann an diesem Profilkörper angebracht. Je nach Verwendungszweck können zusätzliche Elemente, wie Spoiler oder Heizvorrichtungen oder Elemente zur Abgabe von Waschflüssigkeit oder Ähnliches an dem Wischblatt vorgesehen oder angebracht sein.

Gegenteilig zu den flachen Wischblättern sind die so genannten "Bügelwischblätter". Ein typisches Beispiel für Bügelwischblätter ist in der DE 44 15 065 A1 (dortige Figur 1) dargestellt. Bügelwischblätter besitzen ein aus waagebalkenartig über Gelenke miteinander verbundenen Bügeln gebildetes Traggestell, das mit seinem Hauptbügel über einen Wischblattadapter mit dem Wischarm verbindbar ist. Der Wischgummi wird an dem Traggestell gehalten und geführt indem einwärts gerichtete Krallenpaare an den Bügelenden der untersten Hierarchieebene der Bügelkonstruktion in Nuten an den Längsseiten des Wischgummis eingreifen. In den Wischgummi eingelegte Federschienen sorgen für eine Vergleichmäßigung der über die Bügel auf den Wischgummi übertragen Anpresskraft.
Aufgabe der Erfindung ist es, eine Wischarm/Wischblatt-Verbindung aufzuzeigen, die als mechanische, hydraulische und zugleich auch elektrische Verbindung ein vereinfachtes Anschließen und Trennen eines elektrisch beheizbaren und zugleich mit Spritzdüsen zum Ausbringen einer Reinigungs- oder Waschflüssigkeit auf die Fahrzeugscheibe versehenen Wischblattes am Wischarm bzw. vom Wischarm ermöglicht. Zur Lösung dieser Aufgabe ist eine Wischblatt/Wischarm-Verbindung entsprechend dem Patentanspruch 1 ausgebildet.
Aufgabe der Erfindung ist weiterhin, ein Wischblatt aufzuzeigen, welches Spritzdüsen oder -öffnungen zum Ausbringen der Wasch- oder Reinigungsflüssigkeit auf die Fahrzeugscheibe aufweist, elektrisch beheizbar ist und problemlos an einem Wischarm einer Scheibenwischanlage befestigbar und von diesem abnehmbar ist. Zur Lösung dieser Aufgabe ist ein Wischblatt entsprechend dem Patentanspruch 14 ausgebildet.
Weiterbildungen, Vorteile und Anwendungsmöglichkeiten der Erfindung ergeben sich aus den abhängigen Ansprüchen und auch aus der nachfolgenden Beschreibung von Ausführungsbeispielen und aus den Figuren.

Die Erfindung wird im Folgenden anhand der Figuren an einem Ausführungsbeispiel näher erläutert. Es zeigen:

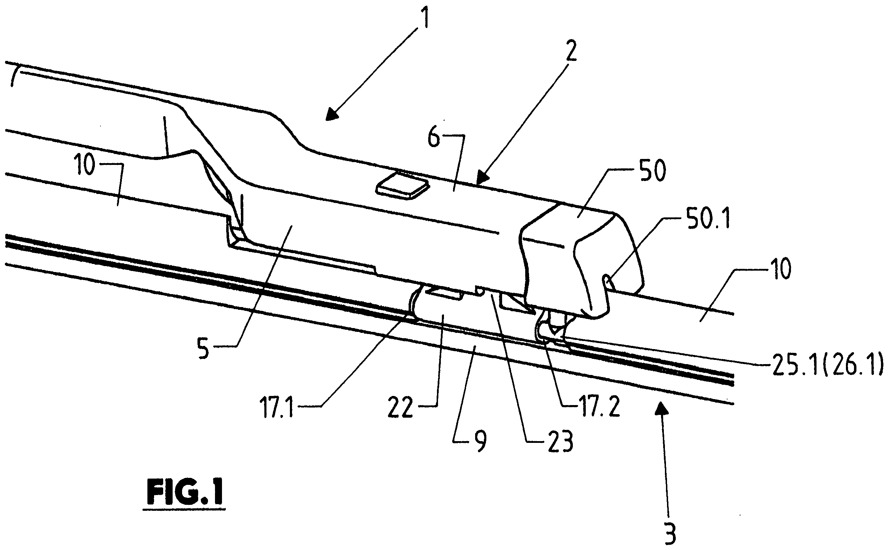

- Fig. 1: in vereinfachter perspektivischer Teildarstellung den Wischarm einer Scheibenwischanlage zusammen mit einem an dem Wischarm befestigten Wischblatt;
- Fig. 2: eine Darstellung ähnlich Figur 1, jedoch bei vom Wischarm abgenommenen Wischblatt;

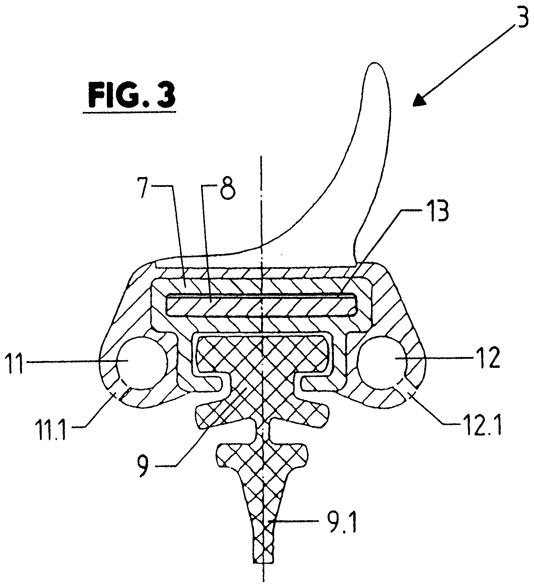

- Fig. 3: in vereinfachter Darstellung einen Schnitt durch das flache Wischblatt der Figuren 1 und 2;
- Fig. 4: einen Schnitt durch den Wischarm der Figuren 1 und 2;

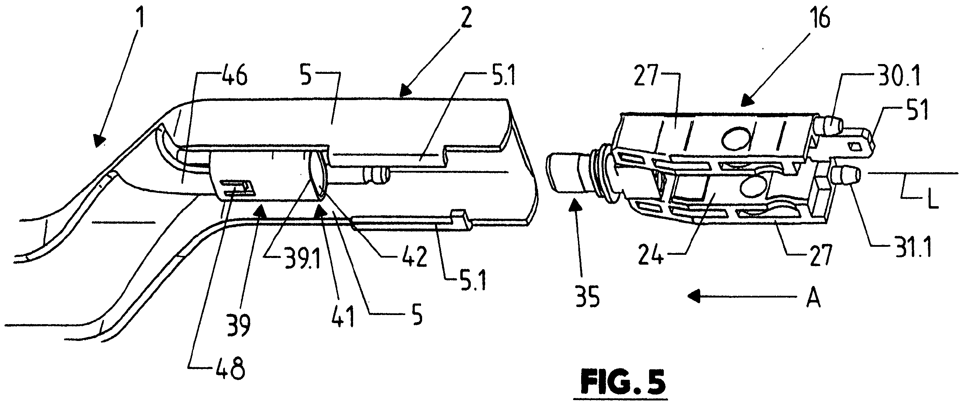

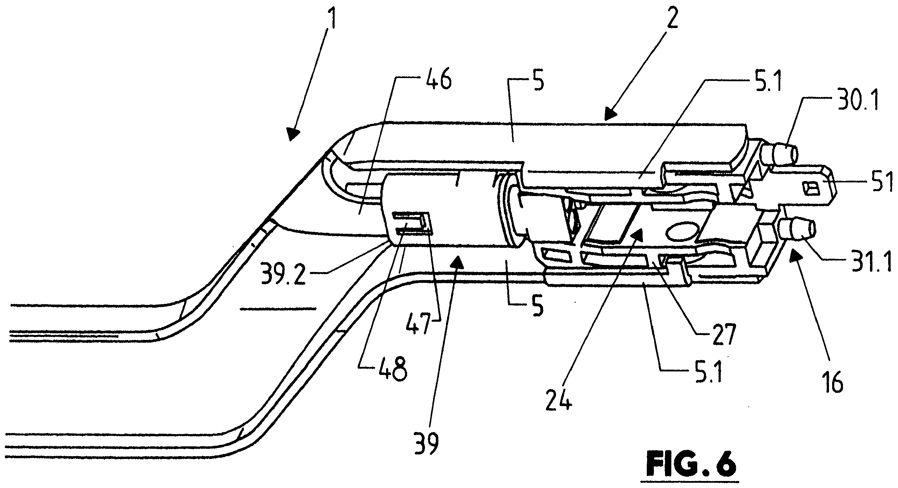

- Fig. 5 und 6: jeweils in perspektivischer Unteransicht das wischblattseitige Ende des Wischarmes zusammen mit einem wischarmseitigen Adapterteil eines zweiteiligen Adapters, und zwar bei vom Wischarm abgenommenen und mit dem Wischblatt verbundenen Adapterteil;
- Fig. 7: in perspektivischer Explosionsdarstellung den Wischarm zusammen mit Elementen des Wischblattes, den Adapterteilen des zweiteiligen Wischblattadapters sowie mit einer wischarmseitigen Kupplungseinheit zum Herstellen einer hydraulischen sowie elektrischen Verbindung zwischen äußeren hydraulischen und elektrischen Leitungen mit dem Wischblatt;

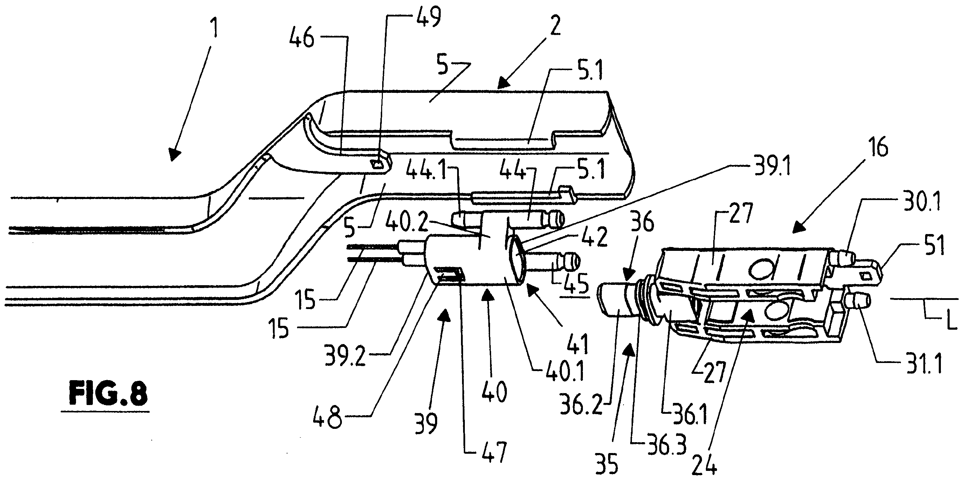

- Fig. 8: eine Darstellung ähnlich Figur 5, jedoch bei vom Wischarm abgenommener wischarmseitigen Kupplungseinheit;

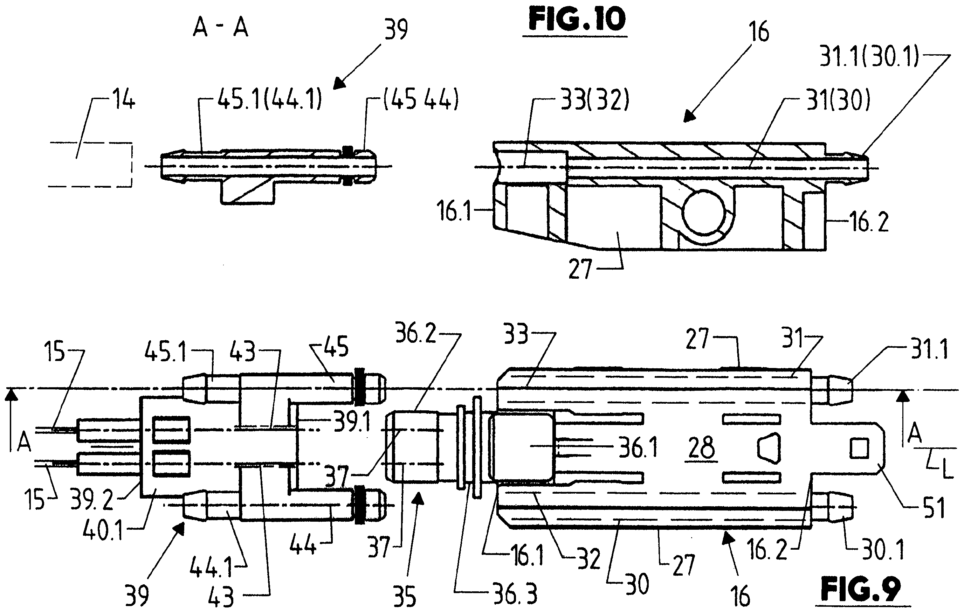

- Fig. 9: eine Draufsicht auf das wischarmseitige Adapterteil und die wischarmseitige Kupplungseinheit, bei von der Kupplungseinheit getrennten Adapterteil;
- Fig. 10: einen Schnitt entsprechend der Linie A - A der Figur 9;

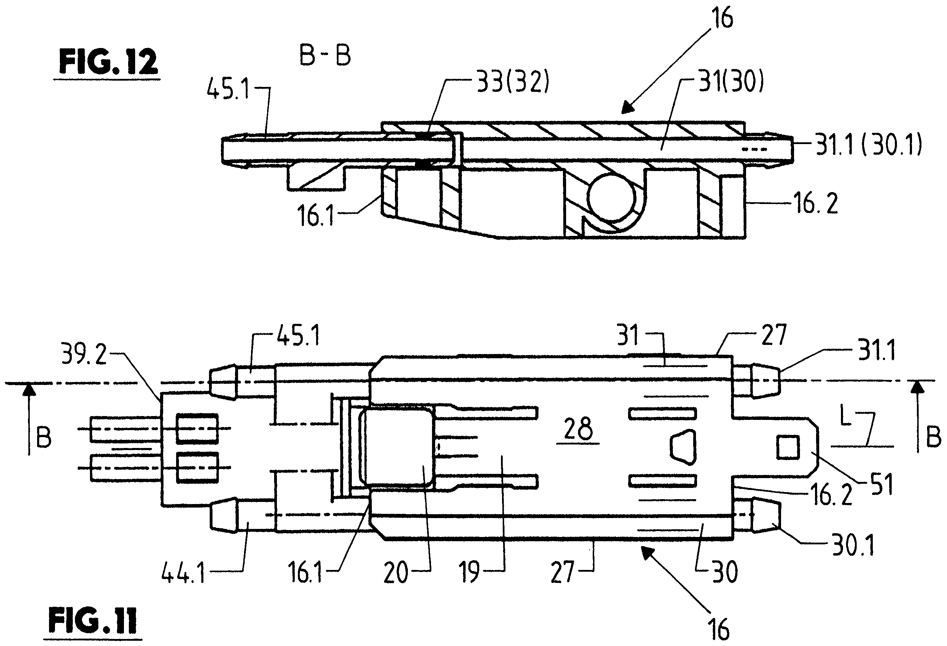

- Fig. 11: eine Darstellung wie Figur 9, jedoch bei mit der Kupplungseinheit verbundenem Adapterteil;
- Fig. 12: einen Schnitt entsprechend der Linie B - B der Figur 11;
- Fig. 13 und 14: Schnitte durch weitere flache Wischblätter.

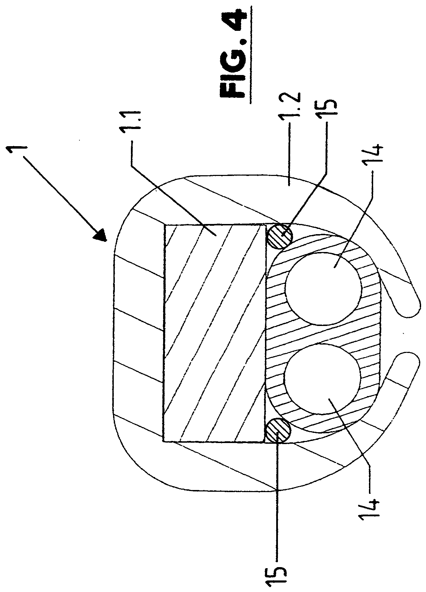

In den Figuren ist 1 der Wischarm einer ansonsten nicht weiter dargestellten Scheibenwischanlage für Fahrzeugscheiben (Fahrzeugfrontscheiben). Dargestellt ist in den Figuren jeweils im Wesentlichen nur das wischblattseitige Ende des Wischarmes 1, der in an sich bekannter Weise auf einer Teillänge auch als Wischarmstange 1.1 aus einem metallischen Stangenprofil (Figur 4) hergestellt ist. An seinem wischblattseitigen Ende ist der Wischarm 1 mit einer Aufnahme 2 versehen, und zwar zur wieder lösbaren Befestigung des Wischblattes 3 bzw. eines am Wischblatt 3 vorgesehenen, d.h. vormontierten Wischblattadapters 4 in der nachstehend noch näher beschriebenen Weise. Zur Bildung der Aufnahme 2 weist der Wischarm 1 an seinem wischblattseitigen Ende ein zur Wischarmunterseite und zum montierten Wischblatt 3 sowie auch zum freien Ende des Wischarmes 1 hin offenes U-Profil mit zwei Schenkeln 5 und einem diese Schenkel verbindenden Jochabschnitt 6 auf. Jeder Schenkel 5 ist an seinem freien Rand mit einer in das U-Profil hineinragenden Abwinklung 5.1 versehen. Der Wischarm 1 ist beispielsweise zumindest im Bereich seines die Aufnahme 2 bildenden Endes aus einem metallischen Flachmaterial, beispielsweise aus Stahl durch Biegen und Stanzen hergestellt.

Das Wischblatt 3 ist als flaches beheizbares Wischblatt ausgeführt. Es besteht bei der dargestellte Ausführungsform u.a. aus einem Wischblattkörper oder einer Profilschiene 7, die sich über die gesamte Länge des Wischblatt 3 erstreckt und eine Federschiene 8 umschließt. An der Profilschiene 7 sind der die Wischlippe 9.1 bildende und sich ebenfalls über die gesamte Länge des Wischblattes 3 erstreckende Wischgummi 9 sowie ein Spoilerprofil 10 gehalten. Das Wischblatt 3 ist weiterhin mit zwei sich jeweils über eine Wischblattlängsseite erstreckenden und in der Profilschiene 7 ausgebildeten Verteiler- oder Spritzkanälen 11 und 12 versehen, die jeweils eine Vielzahl von Düsenöffnungen 11.1 bzw. 12.1 zum Ausbringen einer Reinigungs- oder Waschflüssigkeit, beispielsweise zum Ausbringen von Wasser mit Reinigungs- und/oder Frostschutzzusätzen auf die nicht dargestellte Fahrzeugscheibe aufweisen. Auf der Federschiene 8 oder auf der Profilschiene 7 ist ein als Heizfolie ausgebildetes Heizelement 13 vorgesehen.

Die Versorgung der Spritzkanäle 11 und 12 mit der Spritz- und Reinigungsflüssigkeit erfolgt über im Wischarm 1 verlegte und von wenigstens einer Schlauchleitung gebildete Flüssigkeitsleitungen 14, mit denen die Spritzkanäle 11 und 12 jeweils im Bereich des Wischblattadapters 4 in der nachstehend noch näher beschriebenen Weise verbunden sind. Bei der dargestellten Ausführungsform sind zwei Flüssigkeitsleitungen 14 vorgesehen, die jeweils von einem Kanal eines Doppelschlauchs gebildet sind.

Das Heizelement 13 ist in der nachstehend noch näher beschriebenen Weise ebenfalls im Bereich des Wischblattadapters 4 mit wenigstens einer äußeren, u.a. im Wischarm verlaufenden elektrischen Anschlussleitung 15 in der nachstehend noch näher beschriebenen Weise zum Zuführen des Heizstromes verbunden. Die Figur 4 zeigt die Befestigung Flüssigkeitsleitungen 14 bzw. des Doppelschlauchs und der Leitungen 15 am Wischarm 1 bzw. an der von der Wischarmstange 1.1 gebildeten Teillänge des Wischarms 1 mit Hilfe von Klammern 1.2.

Der Wischblattadapter 4 ist zweiteilig ausgeführt, und zwar bestehend aus einem wischarmseitigen Adapterteil 16 und aus einem wischblattseitigen Adapterteil 17, welches fest mit dem Wischblatt 3 verbunden ist, und zwar in der Weise, dass das Adapterteil 17 das Wischblatt 3 bzw. den Wischblattkörper oder die Profilschiene 7 an der Wischblattoberseite reiterartig übergreift. Beide Adapterteile 16 und 17 sind mittels eines Gelenkbolzens 18 gelenkig miteinander verbunden, so dass das Wischblatt 3 bei am Wischarm 1 montiertem Wischblattadapter 4 um die Achse des Gelenkbolzens 18 leicht schwenkbar am Wischarm 1 vorgesehen ist.

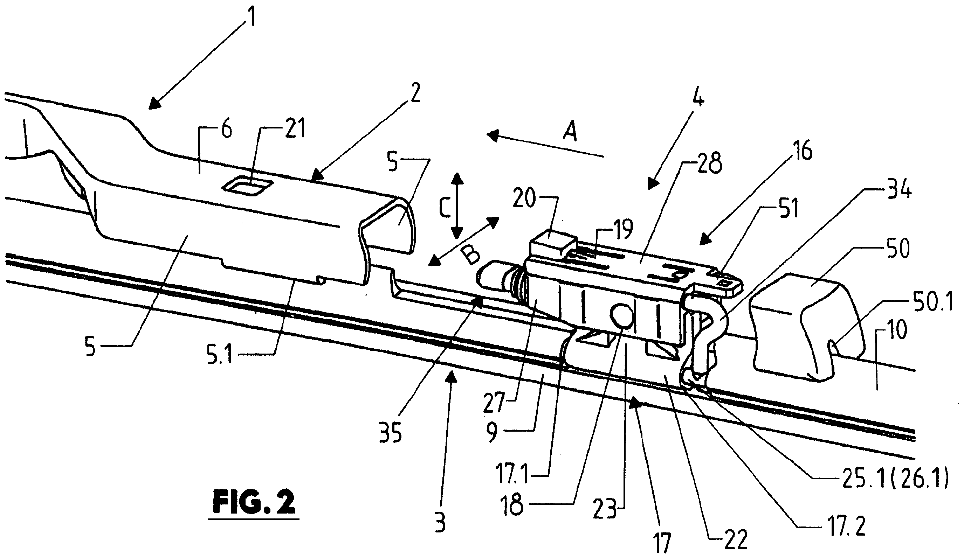

Für das mechanische Verbinden des Wischblattes 3 mit dem Wischarm 1 ist das Adapterteil 16 in die Aufnahme 2 von dem freien Ende des Wischarmes 1 in der in der Figur 2 mit dem Pfeil A angegebenen Fügerichtung, d.h. in etwa in Längsrichtung des Wischblattes 3 bzw. des Adapterteils 16 einschiebbar und in der Aufnahme 2 durch Verrasten verankerbar. Hierfür ist das Adapterteil 16 an seiner Oberseite mit einer Federzunge 19 mit angeformter, von einem Vorsprung gebildeten Rast 20 ausgebildet, die bei in die Aufnahme 2 vollständig eingeführtem Adapterteil 16 an einer von einer Öffnung 21 im Jochabschnitt 6 gebildeten Gegenrast 21 einrastet, so dass das Adapterteil 16 und damit der Wischblattadapter 4 insgesamt durch Verrasten formschlüssig in der Aufnahme 2 gehalten ist, wobei die Innenflächen der Aufnahme 2 bzw. der Schenkel 5 und des Jochabschnittes 6 dicht gegen die Seitenflächen und die Oberseite des Adapterteils 16 anliegen und dieses Adapterteil an seiner dem Wischblatt 3 zugewandten Unterseite von den Abwinklungen 5.1 hintergriffen wird. Die Adapterteile 16 und 17 sind Formteile, vorzugsweise solche aus Kunststoff.

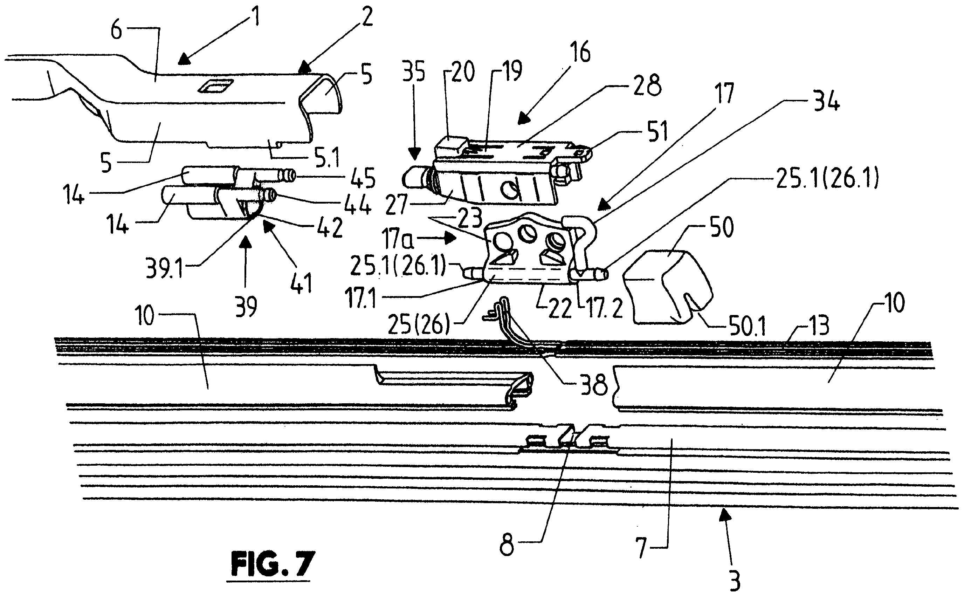

Um die reiterartige Befestigung des Adapterteils 17 am Wischblatt 3 zu ermöglichen, ist dieses Adapterteil bei der dargestellten Ausführungsform seinerseits zweiteilig ausgebildet, und zwar bestehend aus zwei identischen bzw. formgleichen Formteilen 17a, die an einer Mittelebene des Adapterteils 17, zu der dieses Adapterteil 17 spiegelsymmetrisch ausgebildet ist, aneinander anschließend miteinander verbunden sind. Die beiden Formteile 17a sind so ausgeführt, dass das Adapterteil 17 einen das Wischblatt 3 reiterartig übergreifende und in den Figuren 2 und 7 unteren Abschnitt 22 und an diesen anschließend einen in diesen Figuren oberen plattenförmigen Abschnitt 23 bildet, an dem die beiden Formteile 17a auch in geeigneter Weise miteinander verbunden sind und der bei montiertem Wischblattadapter 4 in eine Ausnehmung 24 des Adapterteils 16 hineinreicht und beim Schwenken um die Achse des Gelenkbolzens 18 mit dem Abschnitt 23 in dieser Ausnehmung 24 geführt ist. Im Abschnitt 22 ist das Adapterteil 17 mit zwei Strömungs- oder Flüssigkeitskanälen 25 und 26 ausgebildet, von denen jeder an einer Längsseite des Adapterteils 17 sich in Längsrichtung L dieses Adapterteils erstreckt und beidendig jeweils Anschlussstutzen 25.1 bzw. 26.1 bilden, die über die senkrecht zu der Längserstreckung oder Längsrichtung L des Adapterteils 17 bzw. des Wischblattes 3 orientierten Stirnseiten 17.1 und 17.2 des Adapterteils 17 vorstehen und über die der Strömungskanal 25 mit dem Spritzkanal 11 und der Strömungskanal 26 mit dem Spritzkanal 12 des Wischblattes 3 verbunden sind.

Die Ausnehmung 24, deren Breite senkrecht zur Längsrichtung L dieses Adapterteils an die Dicke des plattenförmigen Abschnittes 23 angepasst ist, d.h. gleich oder geringfügig größer ist als diese Dicke, ist von zwei Wandabschnitten 27 des Adapterteils 16 begrenzt. Die beiden seitlichen Wandabschnitte 27 formen zusammen mit einem oberen Wandabschnitt 28, der die Oberseite des Adapterteils 16 bildet und die angeformte Federzunge 19 aufweist, ein U-Profil für das Adapterteil 16. In den beiden Wandabschnitten 27 ist der eine Gelenköffnung 29 im Abschnitt 23 durchgreifende Gelenkbolzen 18 beidendig gelagert.

Am Übergang zwischen jeweils einem Wandabschnitt 27 und dem Wandabschnitt 28 sind im Adapterteil 16 Strömungskanäle 30 und 31 ausgebildet, von denen jeder an einer Längsseite des Adapterteils 16 bzw. im Bereich des dortigen Übergangs zwischen dem Wandabschnitt 27 und dem Wandabschnitt 28 vorgesehen ist und sich in Längsrichtung L des Adapterteils 16 erstreckt. An einer senkrecht zur Längserstreckung oder Längsrichtung L des Wischblattadapters 4 bzw. des Wischblattes 3 orientierten Stirnseite 16.1 ist jeder Strömungskanal 30 und 31 mit einem eigenständigen Hydraulik- oder Flüssigkeitsanschluss ausgebildet, und zwar der Strömungskanal 30 mit dem Flüssigkeitsanschluss 32 und der Strömungskanal 31 mit dem Flüssigkeitsanschluss 33. An der der Stirnseite 16.1 abgewandten Stirnseite 16.2 weist jeder Strömungskanal 30 bzw. 31 einen über diese Stirnseite 16.2 wegstehenden Anschlussstutzen 30.1 bzw. 31.1 auf. An jeden Anschlussstutzen 30.1 und 31.2 ist jeweils ein eine adapterinterne Fluid-Verbindung bildendes Verbindungs- oder Schlauchstück 34 aus einem hochflexiblen Material, beispielsweise aus einem hochflexiblen Kunststoff, z.B. aus EPDM oder TPE mit einem Ende angeschlossen. Das andere Ende jedes Schlauchstückes 34 ist an einen Strömungskanal 25 bzw. 26 des Adapterteils 17 angeschlossen, und zwar in der Form, dass der Strömungskanal 30 mit dem Strömungskanal 25 und der Strömungskanal 31 mit dem Strömungskanal 26 verbunden sind. Die beiden Schlauchstücke 34 befinden sich dabei an den Stirnseiten 16.2 und 17.2 der Adapterteile 16 und 17 und sind auf wenigstens einer Teillänge derart gekrümmt, dass durch diese Krümmung sowie durch die Verwendung des hochelastischen Materials eine Behinderung der Schwenkbewegung des Adapterteils 17 zum Adapterteil 16 nicht erfolgt

An der Stirnseite 16.1 des Adapterteils 16 ist weiterhin ein über diese Stirnseite in Längsrichtung L des Adapterteils 16 steckerartig wegstehender elektrischer Anschluss 35 vorgesehen, der bei der dargestellten Ausführungsform u.a. von einem Formkörper 36 aus Kunststoff gebildet ist, der mit einem Abschnitt 36.1 am Adapterteil 16 im Bereich der Stirnseite 16.1 gehalten ist und mit einem Abschnitt 36.2 über diese Stirnseite vorsteht. Zwischen den beiden Abschnitten 36.1 und 36.2 ist der Formkörper 36 mit einem als Dichtung wirkenden Abschnitt 36.3 ausgebildet. Mit dem Abschnitt 36.1 ist der Formkörper 36 vorzugsweise schwimmend im Adapterteil 16 gehalten, und zwar derart, dass eine begrenzte Bewegungsmöglichkeit des Formkörpers 36 in Achsen senkrecht zur Längsrichtung L des Adapterteils 16 besteht, wie dies in den Figuren mit den Doppelpfeilen B und C angedeutet ist. Im Formkörper 36 sind zwei buchsenartige elektrische Kontakte 37 vorgesehen, die jeweils über eine adapterinterne elektrische Leitung 38 mit einem Anschluss des Heizelementes 13 verbunden sind, und zwar im Bereich des Adapterteils 17. Die beiden elektrischen Leitungen 38, die sich somit zwischen dem Anschluss 35 bzw. dem Adapterteil 16 und dem Adapterteil 17 erstrecken, befinden sich bei der dargestellten Ausführungsform gegen äußere Einwirkungen geschützt innerhalb des von dem Abschnitt 23 nicht eingenommenen Raumes der Ausnehmung 24.

Die beiden Flüssigkeitsanschlüsse 32 und 33 sowie der elektrische Anschluss 35 sind an der Stirnseite 16.1 in einer Dreieck-Formation derart angeordnet, dass sich die Flüssigkeitsanschlüsse 32 und 33 oberhalb des elektrischen Anschlusses 35 befinden und im Übrigen das Adapterteil 16 auch hinsichtlich der Lage der Flüssigkeitsanschlüsse 32 und 33 sowie des elektrischen Anschlusses 35 spiegelsymmetrisch zu einer die Längsachse oder Längsrichtung L des Adapterteils 16 einschließenden und senkrecht zur Oberseite dieses Adapterteils bzw. senkrecht zur Achse des Gelenkbolzens 18 orientierten Mittelebene spiegelsymmetrisch ausgebildet ist.

Zum Herstellen der elektrischen sowie der fluidischen Verbindung zwischen dem Wischblattadapter 4 und damit dem Wischblatt 3 und der wenigstens einen äußeren elektrischen Anschlussleitung 15 und den äußeren Flüssigkeitsleitungen 14 ist eine elektrische/hydraulische Kupplungseinheit 39 vorgesehen, und zwar in der Aufnahme 2 derart, dass beim Herstellen der mechanischen Verbindung zwischen dem Wischblattadapter 4 zugleich auch die elektrische und hydraulische Verbindung des Wischblattadapters 4 und damit des Wischblattes 3 mit der wenigstens einen Anschlussleitung 15 und den Flüssigkeitsleitungen 14 erfolgt.

Die Kupplungseinheit 39 besteht bei der dargestellten Ausführungsform aus einem aus einem geeigneten Material, beispielsweise aus Kunststoff hergestellten Formteil 40, welches an einem Abschnitt 40.1 zunächst einen wischarmseitigen elektrischen Anschluss 41 bildet, und zwar in Form einer Öffnung 42, in der zwei stiftförmige elektrische Kontakte 43 aufgenommen sind und in die zum Herstellen der elektrischen Verbindung des Wischblattes 3 mit dem Wischarm 1 der Abschnitt 36.2 passend einführbar ist, so dass die stiftförmigen Kontakte 43 in jeweils einen buchsenartigen Kontakt 37 des Anschlusses 35 eingreift und der als Dichtung ausgebildete Abschnitt 36.3 die Öffnung 42 und damit die über die Anschlüsse 35 und 41 bzw. über die Kontakte 37 und 43 hergestellte zweipolige elektrische Verbindung nach außen hin dicht verschließt. Jeder Kontakt 43 ist mit einer äußeren Leitung 15 verbunden.

Die Kupplungseinheit 39 bzw. dessen Formkörper 40 weist weiterhin zwei steckerartige Flüssigkeitsanschlüsse 44 und 45 auf, die jeweils über einen stegartigen Abschnitt 40.2 mit dem Abschnitt 40.1 verbunden sind und über die den elektrischen Anschluss 41 bzw. die Öffnung 42 aufweisende Stirnseite 39.1 der Kupplungseinheit 39 vorstehen.

Die elektrischen Leitungen 15 sind an der der Stirnseite 39.1 abgewandten Stirnseite 39.2 abgedichtet aus dem Abschnitt 40.1 des Formkörpers 40 herausgeführt. Die Anordnung des elektrischen Anschlusses 41 bzw. der Öffnung 42 und der Flüssigkeitsanschlüsse 44 und 45 an der Stirnseite 39.1 entspricht der Anordnung des elektrischen Anschlusses 35 und der Flüssigkeitsanschlüsse 32 und 33 an der Stirnseite 16.1 des Adapterteils 16, so dass beim Herstellen der elektrischen Verbindung zwischen den beiden Anschlüssen 35 und 41 durch Einführen der zapfenartigen Flüssigkeitsanschlüsse 44 und 45 in die von Öffnungen gebildeten Flüssigkeitsanschlüsse 32 und 33 zugleich auch die Flüssigkeitsverbindung zwischen den beiden Flüssigkeitsleitungen 14 und dem Wischblatt 3 hergestellt wird, und zwar über den in den Flüssigkeitsanschluss 32 dicht eingeführten Flüssigkeitsanschluss 44 die Verbindung zwischen der einen Flüssigkeitsleitung 14 mit dem Spritzkanal 11 und über den abgedichtet in den Flüssigkeitsanschluss 33 eingeführten Flüssigkeitsanschluss 45 die Verbindung zwischen der Flüssigkeitsleitung 14 und Spritzkanal 12. Jeder Flüssigkeitsanschluss 44 und 45 ist strömungsmäßig mit einem Anschlussstutzen 44.1 bzw. 45.1 verbunden, der jeweils über die dem Flüssigkeitsanschluss 44 bzw. 45 abgewandte Seite des zugehörigen stegförmigen Abschnittes 40.2 wegsteht und an den jeweils eine äußere Flüssigkeitsleitung 14 angeschlossen ist.

Um das Herstellen der elektrischen Verbindung und der Flüssigkeitsverbindungen zwischen dem Adapterteil 16 und der Kupplungseinheit 39 zu erleichtern, sind die Flüssigkeitsanschlüsse 44 und 45 beispielsweise so ausgebildet, dass die über die Stirnseite 39.1 vorstehende Länge dieser Flüssigkeitsanschlüsse etwas größer ist als die Länge, mit der der elektrische Anschluss 35 bzw. dessen Formteil 36 über die Stirnseite 16.1 vorsteht, sodass beim Verbinden des Adapterteils 16 mit der Kupplungseinheit 39 zunächst die zapfenartigen Flüssigkeitsanschlüsse 44 und 45 in die von Öffnungen gebildeten Flüssigkeitsanschlüsse 32 und 33 eingreifen und beim weiteren Ankoppeln des Adapterteils 16 an die Kupplungseinheit 39 bzw. beim Einführen des Anschlusses 35 in den elektrischen Anschluss 41 bzw. ein dessen Öffnung 42 das Adapterteil 16 an den zapfenartigen Flüssigkeitsanschlüssen 44 und 45 geführt ist. Eventuell vorhandene Toleranzen werden beim Verbinden der elektrischen Anschlüsse 35 und 41 durch die schwimmende Befestigung es Anschlusses 35 am Adapterteil 16 ausgeglichen.

Die Kupplungseinheit 39 ist in der Aufnahme 2 bzw. an dem dem freien Ende des Wischarmes 1 entfernt liegenden Ende dieser Aufnahme befestigt, und zwar derart, dass die Achsen der Öffnung 42 des elektrischen Anschlusses 41 und der zapfenartigen Flüssigkeitsanschlüsse 44 und 45 jeweils parallel zueinander und parallel zur Fügerichtung A orientiert sind, so dass beim Einschieben des Adapterteils 16 in die Aufnahme 2 in Fügerichtung A, d.h. vom freien Ende des Wischarmes 1 her nicht nur die oben bereits erwähnte mechanische Verbindung des Wischblattadapters 4 und damit des Wischblattes 3 mit dem Wischarm 1 unter Verrasten der Rast 20 an der Gegenrast 21 erfolgt, sondern zugleich auch durch Einführen der Flüssigkeitsanschlüsse 44 und 45 in die adapterseitigen Flüssigkeitsanschlüsse 32 und 33 sowie durch Einführen des elektrischen Anschlusses 35 in den elektrischen Anschluss 41 die hydraulische Verbindung oder Flüssigkeitsverbindung und die elektrische Verbindung zwischen dem Wischarm 1 und dem Wischblattadapter 4 bzw. dem Wischblatt 3 hergestellt werden.

Bei der dargestellten Ausführungsform ist die Kupplungseinheit 39 an einer aus dem Flachmaterial des Wischarmes 1 durch Stanzen und Biegen geformten Lasche 46 durch Verrasten gehalten. Die Lasche 46 ist dabei so gebogen, dass sie mit ihrem die Ausnehmung 47 aufweisenden freien Ende in das Innere des die Aufnahme 2 bildenden U-Profils hineinreicht. Das Formteil 40 ist im Bereich seines Abschnitts 40.1 mit einer Ausnehmung 47 versehen, die an der Stirnseite 39.2 offen und in die die Lasche 46 passend einführbar ist. Im Bereich der Ausnehmung 47 ist das Formteil 40 weiterhin mit einer Federzunge 48 ausgeführt, die in eine Ausnehmung 47 hineinreichende Rast aufweist, welche nach dem Aufschieben des Formteils 40 auf die Lasche 46 an einer dortigen, von einer Öffnung gebildeten Gegenrast 49 einrastet, wodurch eine sehr einfache, aber dennoch zuverlässige Montage der Kupplungseinheit 39 in die Aufnahme 2 erreicht ist.

Mit 50 ist eine beispielsweise aus Kunststoff bezeichnete Kappe bezeichnet, die nach der Montage des Wischblattadapters 4 bzw. des Wischblattes 3 am Wischarm 1 auf eine einstückig mit dem Adapterteil 16 hergestellte und über die Stirnseite 16.2 wegstehende Lasche 51 aufschiebbar und an dieser Lasche durch Verrasten verriegelbar ist, sodass die Abdeckkappe 50 nicht nur optisch einen Abschluss des Wischarmes 1 an seinem freien Ende bildet, sondern auch die beiden Verbindungen bzw. Schläuche 34 aufnimmt und nach außen hin abdeckt. Die Kappe 50 ist mit einer Ausnehmung 50.1 versehen, an der die Kappe 50 den spoilerartigen Abschnitt 10 zur zusätzlichen Sicherung reiterartig übergreift.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird. Allen Ausführungsbeispielen ist aber gemeinsam, dass beim Herstellen der mechanischen Verbindung zwischen dem Wischblatt 3 zugleich auch die hydraulische Verbindung zum Zuführen der Reinigungs- und Waschflüssigkeit an wenigstens einen Spritzkanal oder an wenigstens eine wischblattseitige Düsenöffnung oder Düse sowie auch die elektrische Verbindung zwischen den Wischblatt und den Wischarm hergestellt wird, und zwar über das wischarmseitige Adapterteil des Wischblattadapters, d.h. über dasjenige Adapterteil des Wischblattadapters, welches mit dem Wischarm über die mechanische Verbindung wieder lösbar verbunden ist.

So ist es beispielsweise möglich, die elektrischen Anschlussleitungen 15 als Heizleitungen auszubilden, und zwar beispielsweise in der Form, dass diese elektrischen Leitungen 15 als Heiz- oder Widerstandsdrähte in den Flüssigkeitskanälen 14 verlaufend vorgesehen sind. Mit einfachen Mitteln ist dadurch zugleich ein Beheizen der Versorgungs- oder Flüssigkeitsleitungen 14 für die Reinigungs- oder Waschflüssigkeit erreicht. Weiterhin besteht auch die Möglichkeit, zusätzlich zu den Anschlussleitungen 15 zum Beheizen der Flüssigkeitskanäle 14 in diesen als elektrische Heizelemente wirkende Heiz- oder Widerstandsdrähte vorzusehen, wobei dann die elektrischen Leitungen 15 beispielsweise außerhalb der Flüssigkeitskanäle 14 verlaufend angeordnet sind.

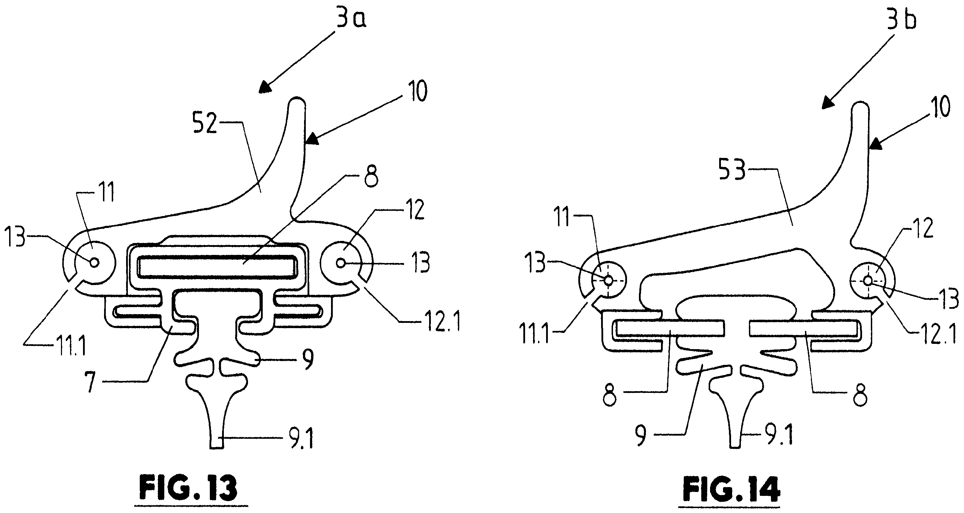

Vorstehend wurde davon ausgegangen, dass das Heizelement 13 von einer Heizfolie gebildet ist. Grundsätzlich kann das Heizelement 13 auch ein sich innerhalb der Spritzkanäle 11 und 12 erstreckender Heiz- oder Widerstandsdraht sein, der wenigstens einen geschlossenen elektrischen Heizstromkreis bildet. Beispiele hierfür zeigen die Figuren 13 und 14.

Bei dem in der Figur 13 im Querschnitt dargestellte flache Wischblatt 3a ist an der Profilschiene 7 ein den Spoiler 10 bildendes Spoilerprofil 52 aus Kunststoff befestigt. In diesem Spoilerprofil sind die beiden Spritzkanäle 11 und 12 mit den zugehörigen Düsenöffnungen 11.1 und 12.1 ausgebildet. In jedem Spritzkanal 11 und 12 verlaufend ist wenigstens eine Länge des das wischblattseitige Heizelement 13 bildenden Heiz- oder Widerstandsdrahtes vorgesehen.

Das in der Figur 14 im Querschnitt dargestellte flache Wischblatt 3b weist die Profilschiene 7 nicht auf. Bei diesem Wischblatt 3b sind zwei sich jeweils über die gesamte Länge des Wischblattes erstreckende Federschienen 8 vorgesehen, zwischen denen der Wischgummi 9 dadurch gehalten ist, dass die Federschienen 8 jeweils mit einem Teil ihrer Breite in Ausnehmungen des Wischgummis 9 eingreifen. Die Federschienen 8 sind an ihrem aus dem Wischgummi vorstehenden Bereichen von einem bei dieser Ausführungsform als Spoilerprofil 53 aus Kunststoff ausgebildeten Wischblattelement übergriffen. Im Spoilerprofil 53 sind die Spritzkanäle 11 und 12 mit den Düsen- und Spritzöffnungen 11.1 und 12.1 ausgebildet. Das wischblattseitige Heizelement 13 ist wiederum von Längen eines Heiz- und Widerstandsdrahtes gebildet, der in den Spritzkanälen 11 und 12 verläuft.

Es versteht sich, dass auch bei den Wischblättern 3a und 3b das wischblattseitige Heizelement 13 andersartig ausgebildet sein kann, beispielsweise als Heizfolie.

## Patentansprüche

1. Wischarm/Wischblatt-Verbindung zwischen einem Wischblatt (3, 3a, 3b) und einem Wischarm (1) einer Scheibenwischanlage für Fahrzeuge, mit einem am Wischblatt (3, 3a, 3b) vorgesehenen Wischblattadapter (4) zur lösbaren Befestigung des Wischblattes (3, 3a, 3b) am Wischarm (1), wobei das Wischblatt (3, 3a, 3b) als flaches Wischblatt (3, 3a, 3b) ausgebildet ist und an wenigstens einer Wischblattlängsseite zumindest eine Düsenöffnung (11.1, 12.1) und/oder zumindest einen Spritz- oder Verteilerkanal (11, 12) mit Düsenöffnungen (11.1, 12.1) zum Ausbringen einer Reinigungs- oder Waschflüssigkeit auf eine Fahrzeugscheibe aufweist, sowie mit wenigstens einem adapterseitigen Flüssigkeitsanschluss (32, 33) am Wischblattadapter (4) zum lösbaren Verbinden der wenigstens einen Düsenöffnung (11.1, 12.1) und/oder des wenigstens einen Spritz- oder Verteilerkanals (11, 12) mit wenigstens einer äußeren Flüssigkeitsleitung (14) zum Zuführen der Wasch- oder Reinigungsflüssigkeit, und zwar über eine an die wenigstens eine Flüssigkeitsleitung (14) angeschlossene und lösbar mit dem Wischblattadapter (4) verbundene Kupplungseinheit (39), **dadurch gekennzeichnet, dass** das Wischblatt (3, 3a, 3b) als elektrisch beheizbares Wischblatt (3, 3a, 3b) ausgebildet ist, dass der Wischblattadapter (4) zusätzlich zu dem wenigstens einen Flüssigkeitsanschluss (32, 33) auch wenigstens einen elektrischen Anschluss (35) aufweist, der über die Kupplungseinheit (39) mit wenigstens einer äußeren elektrischen Leitung (15) zum Zuführen des Heizstromes an das Wischblatt (3, 3a, 3b) lösbar verbunden ist, und dass der Wischblattadapter (4) zumindest zweiteilig ausgebildet ist.

2. Verbindung nach Anspruch 1, **dadurch gekennzeichnet, dass** der Wischblattadapter (4) ein am Wischarm (1) lösbar befestigtes wischarmseitiges Adapterteil (16) und ein am Wischblatt (3, 3a, 3b) befestigtes wischblattseitiges Adapterteil (17) aufweist, und dass der wenigstens eine adapterseitige Flüssigkeitsanschluss (32, 33) sowie der wenigstens eine adapterseitige elektrische Anschluss (35) am wischarmseitigen Adapterteil (16) vorgesehen sind.

3. Verbindung nach Anspruch 1 oder 2, **dadurch gekennzeichnet, dass** an der Kupplungseinheit (39) wenigstens ein Flüssigkeitsanschluss (44, 45) und wenigstens ein elektrischer Anschluss (41) vorgesehen sind.

4. Verbindung nach einem der vorhergehenden Ansprüche, **dadurch gekennzeichnet, dass** die Flüssigkeitsanschlüsse (32, 33; 44, 45) und die elektrischen Anschlüsse (35, 41) als stecker- und buchsenartige Anschlüsse ausgeführt sind,
und/oder
dass am Wischblattadapter (4) und an der Kupplungseinheit (39) jeweils wenigstens zwei einander zugeordnete Flüssigkeitsanschlüsse (32, 33; 44, 45) und/oder jeweils mindestens ein wenigstens einpoliger elektrischer Anschluss (35, 41) vorgesehen sind.

5. Verbindung nach einem der vorhergehenden Ansprüche, **dadurch gekennzeichnet, dass** der Wischarm (1) mit einer Aufnahme (2) ausgebildet ist, in der das Wischblattadapter (4) oder dessen wischarmseitiges Adapterteil (16) durch Einführung in einer Fügerichtung (A) befestigt ist, und dass die Kupplungseinheit (39) mit ihrem wenigstens einen elektrischen Anschluss (41) und mit ihrem wenigstens einen Flüssigkeitsanschluss (44, 45) derart in der Aufnahme (2) angeordnet ist, dass beim Einführen des Wischblattadapters (4) oder des wischarmseitigen Adapterteils (16) in Fügerichtung (A) die Verbindung zwischen dem wenigstens einen adapterseitigen Flüssigkeitsanschluss (32, 33) und dem zugehörigen, an der Kupplungseinheit (39) vorgesehenen wenigstens einen Flüssigkeitsanschluss (44, 45) sowie auch die elektrische Verbindung zwischen dem wenigstens einen adapterseitigen elektrischen Anschluss (35) und dem wenigstens einen an der Kupplungseinheit (39) vorgesehenen elektrischen Anschluss (41) erfolgen.

6. Verbindung nach einem der vorhergehenden Ansprüche, **dadurch gekennzeichnet, dass** die Aufnahme (2) am Wischarm eine beispielsweise am freien Ende des Wischarmes (1) gebildete Öffnung zum Einführen des Wischblattadapters (4) oder des wischarmseitigen Adapterteils (16) aufweist, und dass die Kupplungseinheit (39) an der der Öffnung der Aufnahme (2) gegenüber liegenden Seite dieser Aufnahme (2) vorgesehen ist.

7. Verbindung nach einem der vorhergehenden Ansprüche, **dadurch gekennzeichnet, dass** der wenigstens eine Flüssigkeitsanschluss (32, 33) am wischarmseitigen Adapterteil (16) über wenigstens eine am Wischblattadapter (4) ausgebildete Strömungsverbindung (34) mit wenigstens einem im wischblattseitigen Adapterteil (17) ausgebildeten Strömungskanal (25, 26) verbunden ist, der seinerseits mit der wenigstens einen Düsenöffnung (11.1, 12.1) oder mit dem wenigstens einen Spritzkanal (11, 12) in Verbindung steht.

8. Verbindung nach Anspruch 7, **dadurch gekennzeichnet, dass** an beiden Wischblattlängsseiten jeweils wenigstens eine Düsenöffnung (11.1, 12.1) und oder ein wenigstens Spritzkanal (11, 12) vorgesehen sind, und dass die wenigstens eine Düsenöffnung (11.1, 12.1) und/oder der jeweilige Spritzkanal (11, 12) an jeder Längsseite über einen eigenen, im wischblattseitigen Adapterteil (17) ausgebildeten Strömungskanal (25, 26) und eine eigene adapterinterne Verbindung (34) mit einem eigenen Flüssigkeitsanschluss (32, 33) am wischarmseitigen Adapterteil (16) verbunden ist.

9. Verbindung nach Anspruch 8, **dadurch gekennzeichnet, dass** die adapterinterne Flüssigkeitsverbindung von einem flexiblen Schlauch oder Schlauchstück (34) gebildet ist.

10. Verbindung nach einem der vorhergehenden Ansprüche, **dadurch gekennzeichnet, dass** wenigsten sein elektrischer Anschluss (35) und/oder die Kupplungseinheit (39) schwimmend befestigt sind.

11. Verbindung nach einem der vorhergehenden Ansprüche, **dadurch gekennzeichnet, dass** die wenigstens eine elektrische Leitung (15) zum Zuführen des Heizstromes an das Wischblatt (3, 3a, 3b) und/oder die wenigstens eine Flüssigkeitsleitung (14) zumindest auf einer Teillänge am Wischarm (1) verlaufen.

12. Verbindung nach einem der vorhergehende Ansprüche, **dadurch gekennzeichnet, dass** die wenigstens eine elektrische Leitung (15) zumindest auf einer Teillänge innerhalb wenigstens einer Flüssigkeitsleitung (14) verläuft und dort beispielsweise von einem Heiz- oder Widerstandsdraht zur Bildung eines elektrischen Heizelementes ausgeführt ist.

13. Verbindung nach einem der vorhergehenden Ansprüche, **dadurch gekennzeichnet, dass** die Kupplungseinheit (39) vorzugsweise durch Verrasten an einer am Wischarm (1) vorgesehenen, beispielsweise einstückig mit dem Wischarm (1) hergestellten Lasche (46) gehalten ist.

14. Wischblatt für eine Scheibenwischanlage bei Fahrzeugen, mit einem am Wischblatt (3, 3a, 3b) vorgesehenen Wischblattadapter (4) zur lösbaren Befestigung des Wischblattes (3, 3a, 3b) an einem Wischarm (1), wobei das Wischblatt (3, 3a, 3b) als flaches Wischblatt (3, 3a, 3b) ausgebildet ist und an wenigstens einer Wischblattlängsseite zumindest eine Düsenöffnung (11.1, 12.1) oder zumindest einen Spritz- oder Verteilerkanal (11, 12) mit Düsenöffnungen (11.1, 12.1) zum Ausbringen einer Reinigungs- oder Waschflüssigkeit auf eine Fahrzeugscheibe aufweist, sowie mit wenigstens einem adapterseitigen Flüssigkeitsanschluss (32, 33) am Wischblattadapter (4) zum lösbaren Verbinden der wenigstens einen Düsenöffnung (11.1, 12.1) oder des wenigstens einen Spritz- oder Verteilerkanals (11, 12) mit wenigstens einer äußeren Flüssigkeitsleitung (14) zum Zuführen der Wasch- oder Reinigungsflüssigkeit, und zwar über eine an die wenigstens eine Flüssigkeitsleitung (14) anschließbare und lösbar mit dem Wischblattadapter (4) verbindbare Kupplungseinheit (39),
**dadurch gekennzeichnet,**
**dass** das Wischblatt (3, 3a, 3b) als elektrisch beheizbares Wischblatt (3, 3a, 3b) ausgebildet ist, dass der Wischblattadapter (4) zusätzlich zu dem wenigstens einen Flüssigkeitsanschluss (32, 33) auch wenigstens einen elektrischen Anschluss (35) zum Verbinden mit wenigstens einem wischarmseitigen elektrischen Anschluss (41) aufweist, und dass der Wischblattadapter (4) zumindest zweiteilig ausgebildet ist.

15. Wischblatt nach Anspruch 14, **dadurch gekennzeichnet**, der Wischblattadapter (4) ein am Wischarm (1) lösbar befestigbares wischarmseitiges Adapterteil (16) und ein am Wischblatt (3, 3a, 3b) befestigbares wischblattseitiges Adapterteil (17) aufweist, und dass der wenigstens eine adapterseitige Flüssigkeitsanschluss (32, 33) sowie der wenigstens eine adapterseitige elektrische Anschluss (35) am wischarmseitigen Adapterteil (16) vorgesehen sind.

16. Wischblatt nach Anspruch 14 oder 15, **dadurch gekennzeichnet, dass** der wenigstens eine Flüssigkeitsanschluss (32, 33) und/oder der wenigstens eine elektrische Anschluss (35) als stecker- oder buchsenartige Anschluss ausgeführt sind,
und/oder dass am Wischblattadapter (4) wenigstens zwei Flüssigkeitsanschlüsse (32, 33) und/oder jeweils mindestens ein wenigstens einpoliger elektrischer Anschluss (35) vorgesehen sind.

17. Wischblatt nach einem der Ansprüche 14 - 16, **dadurch gekennzeichnet, dass** der wenigstens eine Flüssigkeitsanschluss (32, 33) am wischarmseitigen Adapterteil (16) über wenigstens eine am Wischblattadapter (4) ausgebildete Strömungsverbindung (34) mit wenigstens einem im wischblattseitigen Adapterteil (17) ausgebildeten Strömungskanal (25, 26) verbunden ist, der seinerseits mit der wenigstens einen Düsenöffnung (11.1, 12.1) oder mit dem wenigstens einen Spritzkanal (11, 12) in Verbindung steht.

18. Wischblatt nach Anspruch 17, **dadurch gekennzeichnet, dass** an beiden Wischblattlängsseiten jeweils wenigstens eine Düsenöffnung (11.1, 12.1) und/oder wenigstens ein Spritzkanal (11, 12) vorgesehen sind, und dass die wenigstens eine Düsenöffnung (11.1, 12.1) und/oder der jeweilige Spritzkanal (11, 12) an jeder Längsseite über einen eigenen, im wischblattseitigen Adapterteil (17) ausgebildeten Strömungskanal (25, 26) und eine eigene adapterinterne Verbindung (34) mit einem eigenen Flüssigkeitsanschluss (32, 33) am wischarmseitigen Adapterteil (16) verbunden ist.

19. Wischblatt nach Anspruch 18, **dadurch gekennzeichnet, dass** die adapterinterne Flüssigkeitsverbindung von einem flexiblen Schlauch oder Schlauchstück (34) gebildet ist.

20. Wischblatt nach einem der Ansprüche 14 bis 19, **dadurch gekennzeichnet, dass** der wenigstens eine elektrische Anschluss (35) schwimmend befestigt ist.

## Claims

1. Wiper arm/wiper blade connection between a wiper blade (3, 3a, 3b) and a wiper arm (1) of a windscreen wiper module for vehicles, having a wiper blade adapter (4) provided on the wiper blade (3, 3a, 3b) for detachable mounting of the wiper blade (3, 3a, 3b) on the wiper arm (1), wherein the wiper blade (3, 3a, 3b) is designed as a flat wiper blade (3, 3a, 3b) and presents on at least one wiper blade longitudinal side at least one jet opening (11.1, 12.1) or/at least one spray or distribution duct (11, 12) having jet openings (11.1, 12.1) for application of a cleaning or washing fluid to a vehicle windscreen and having at least one fluid connection (32, 33) on the wiper blade adapter (4) on the adapter side for detachable connection of the at least one jet opening (11.1, 12.1) and/or the at least one spray or distribution duct (11, 12) to at least one external fluid line (14) for supplying the washing or cleaning fluid and to be more precise, by means of a coupling unit (39) connected to the at least one fluid line (14) and detachably connected to the wiper blade adapter (4), **characterised in that** with the wiper blade (3, 3a, 3b) designed as an electrically heatable wiper blade (3, 3a, 3b), the wiper blade adapter (4) also presents in addition to the at least one fluid connection (32, 33) at least one electrical connection (35), which is detachably connected by means of the coupling unit (39) to at least one external electrical lead (15) for supplying the heating current to the wiper blade (3, 3a, 3b), and that the wiper blade adapter (4) is of at least two-part design.

2. Connection according to claim 1, **characterised in that** the wiper blade adapter (4) comprises an adapter section (16) on the wiper arm side detachably connected to the wiper arm (1) and an adapter section (17) on the wiper blade side connected to the wiper blade (3, 3a, 3b) and that the at least one fluid connection (32, 33) on the adapter side in addition to the at least one electrical connection (35) on the adapter side is provided on the adapter section (16) on the wiper arm side.

3. Connection according to claim 1 or 2, **characterised in that** at least one fluid connection (44, 45) and at least one electrical connection (41) are provided on the coupling unit (39).

4. Connection according to any of the above claims, **characterised in that** the fluid connections (32, 33; 44, 45) and the electrical connections (35, 41) are realised as plug and socket connections and/or that at least two fluid connections (32, 33; 44, 45) allocated to each other and/or at least one at least single-pole electrical connection (35, 41) respectively are provided on the wiper blade adapter (4) and on the coupling unit (39).

5. Connection according to any of the above claims, **characterised in that** the wiper arm (1) is designed with a receptacle (2) in which the wiper blade adapter (4) or the latter's adapter section (16) on the wiper arm side is fixed by insertion in an assembly direction (A) and that the coupling unit (39) with its at least one electrical connection (41) and with its at least one fluid connection (44, 45) is arranged in the receptacle (2) such that on inserting the wiper blade adapter (4) or the adapter section (16) on the wiper arm side in the assembly direction (A), the connection between the at least one fluid connection (32, 33) on the adapter side and the corresponding at least one fluid connection (44, 45) provided on the coupling unit (39) in addition to the electrical connection between the at least one electrical connection (35) on the adapter side and the at least one electrical connection (41) provided on the coupling unit (39)is established.

6. Connection according to any of the above claims, **characterised in that** the receptacle (2) on the wiper arm presents for example an opening formed on the free end of the wiper arm (1) for insertion of the wiper blade adapter (4) or the adapter section (16) on the wiper arm side and that the coupling unit (39) is provided on the side of this receptacle opposite the opening of the receptacle (2).

7. Connection according to any of the above claims, **characterised in that** the at least one fluid connection (32, 33) on the adapter section (16) on the wiper arm side is connected by means of at least one flow connection (34) designed on the wiper blade adapter (4) to at least one flow duct (25, 26) designed in the adapter section (17) on the wiper blade side, which for its part is linked to the at least one jet opening (11.1, 12.1) or to at least one spray duct (11, 12).

8. Connection according to claim 7, **characterised in that** on both wiper blade longitudinal sides, at least one jet opening (11.1, 12.1) respectively and/or at least one spray duct (11, 12) are provided and that the at least one jet opening (11.1, 12.1) and/or the respective spray duct (11, 12) on each longitudinal side is connected by means of an own flow duct (25, 26) designed in the adapter section (17) on the wiper blade side and an own connection (34) internal to the adapter to an own fluid connection (32, 33) on the adapter section (16) on the wiper arm side.

9. Connection according to claim 8, **characterised in that** the fluid connection internal to the adapter is formed of a flexible tube or flexible tube piece (34).

10. Connection according to any of the above claims, **characterised in that** at least its electrical connection (35) and/or the coupling unit (39) are floatingly mounted.

11. Connection according to any of the above claims, **characterised in that** the at least one electrical lead (15) for supplying the heating current to the wiper blade (3, 3a, 3b) and/or the at least one fluid line (14) run at least over a sublength on the wiper arm (1).

12. Connection according to any of the above claims, **characterised in that** the at least one electrical lead (15) runs at least over a sublength within at least one fluid line (14), where it is realised for example by a heating or resistor wire in order to form an electrical heating element.

13. Connection according to any of the above claims, **characterised in that** the coupling unit (39) is preferably retained by catch engagement on a lug (46), provided on the wiper arm (1), manufactured for example in one piece with the wiper arm (1).

14. Wiper blade for a windscreen wiper module for vehicles, having a wiper blade adapter (4) provided on the wiper blade (3, 3a, 3b) for detachable mounting of the wiper blade (3, 3a, 3b) on the wiper arm (1), wherein the wiper blade (3, 3a, 3b) is designed as a flat wiper blade (3, 3a, 3b) and presents on at least one wiper blade longitudinal side at least one jet opening (11.1, 12.1) or least one spray or distribution duct (11, 12) having jet openings (11.1, 12.1) for application of a cleaning or washing fluid to a vehicle windscreen and having at least one fluid connection (32, 33) on the wiper blade adapter (4) on the adapter side for detachable connection of the at least one jet opening (11.1, 12.1) and/or the at least one spray or distribution duct (11, 12) to at least one external fluid line (14) for supplying the washing or cleaning fluid and to be more precise, by means of a coupling unit (39) connected to the at least one fluid line (14) and detachably connected to the wiper blade adapter (4), **characterised in that** with the wiper blade (3, 3a, 3b) is designed as an electrically heatable wiper blade (3, 3a, 3b), the wiper blade adapter (4) also presents in addition to the at least one fluid connection (32, 33) at least one electrical connection (35) for connection to at least one electrical connection (41) on the wiper arm side and that the wiper blade adapter (4) is of at least two-part design.

15. Wiper blade according to claim 14, **characterised in that** the wiper blade adapter (4) comprises an adapter section (16) on the wiper arm side detachably connectable to the wiper arm (1) and an adapter section (17) on the wiper blade side connectable to the wiper blade (3, 3a, 3b) and that the at least one fluid connection (32, 33) on the adapter side in addition to the at least one electrical connection (35) on the adapter side is provided on the adapter section (16) on the wiper arm side.

16. Wiper blade according to claim 14 or 15, **characterised in that** the at least one fluid connection (32, 33) and/or the at least one electrical connection (35) are realised as plug or socket-like connections and/or that at least two fluid connections (32, 33) and/or at least one single-pole electrical connection (35) respectively are provided on the wiper blade adapter (4).

17. Wiper blade according to any one of claims 14 to 16, **characterised in that** the at least one fluid connection (32, 33) on the adapter section (16) on the wiper arm side is connected by means of at least one flow connection (34) designed on the wiper blade adapter (4) to at least one flow duct (25, 26) designed in the adapter section (17) on the wiper blade side, which for its part is linked to the at least one jet opening (11.1, 12.1) or to at least one spray duct (11, 12).

18. Wiper blade according to claim 17, **characterised in that** on both wiper blade longitudinal sides, at least one jet opening (11.1, 12.1) respectively and/or at least one spray duct (11, 12) are provided and that the at least one jet opening (11.1, 12.1) and/or the respective spray duct (11, 12) on each longitudinal side is connected by means of an own flow duct (25, 26) designed in the adapter section (17) on the wiper blade side and an own connection (34) internal to the adapter to an own fluid connection (32, 33) on the adapter section (16) on the wiper arm side.

19. Wiper blade according to claim 18, **characterised in that** the fluid connection internal to the adapter is formed of a flexible tube or flexible tube piece (34).

20. Wiper blade according to any one of claims 14 to 19, **characterised in that** at least its electrical connection (35) is floatingly mounted.

## Revendications

1. Élément de liaison bras d'essuie-glace/balai d'essuie-glace entre un balai d'essuie-glace (3, 3a, 3b) et un bras d'essuie-glace (1) d'installation d'essuyage de vitre pour véhicules, avec un adaptateur de balai d'essuie-glace (4) prévu au niveau du balai d'essuie-glace (3, 3a, 3b) pour la fixation amovible du balai d'essuie-glace (3, 3a, 3b) au bras d'essuie-glace (1), le balai d'essuie-glace (3, 3a, 3b) étant réalisé sous la forme d'un balai d'essuie-glace (3, 3a, 3b) plat et comportant, au niveau d'au moins un côté longitudinal de balai d'essuie-glace, au moins une ouverture de buse (11.1, 12.1) et/ou au moins un canal d'éjection ou de répartition (11, 12) avec des ouvertures de buse (11.1, 12.1) pour faire sortir un fluide de nettoyage ou de lavage sur une vitre de véhicule, ainsi qu'avec au moins un raccord de fluide (32, 33) du côté d'adaptateur au niveau de l'adaptateur de balai d'essuie-glace (4) pour relier de façon amovible l'au moins une ouverture de buse (11.1, 12.1 et/ou l'au moins un canal d'éjection ou de répartition (11, 12) avec au moins une conduite de fluide (14) extérieure pour amener le liquide de lavage ou de nettoyage et notamment via une unité de couplage (39) raccordée à l'au moins une conduite de fluide (14) et reliée de façon amovible à l'adaptateur de balai d'essuie-glace (4), **caractérisé en ce que** le balai d'essuie-glace (3, 3a, 3b) est réalisé sous la forme d'un balai d'essuie-glace (3, 3a, 3b) chauffable électriquement, que l'adaptateur de balai d'essuie-glace (4) comporte en sus de l'au moins un raccord de fluide (32, 33) également au moins un raccord électrique (35) relié de façon amovible, via l'unité de couplage (39), à au moins un câble électrique (15) extérieur pour amener le flux chauffant au balai d'essuie-glace (3, 3a, 3b) et que l'adaptateur de balai d'essuie-glace (4) est réalisé au moins en deux parties.

2. Élément de liaison selon la revendication 1, **caractérisé en ce que** l'adaptateur de balai d'essuie-glace (4) comporte une partie d'adaptateur (16) du côté de bras d'essuie-glace fixée de façon amovible au bras d'essuie-glace (1) et une partie d'adaptateur (17) du côté de balai d'essuie-glace fixée au balai d'essuie-glace (3, 3a, 3b) et que l'au moins un raccord de fluide (32, 33) du côté d'adaptateur ainsi que l'au moins un raccord électrique (35) du côté d'adaptateur sont prévus au niveau de la partie d'adaptateur (16) du côté de bras d'essuie-glace.

3. Élément de liaison selon la revendication 1 ou 2, **caractérisé en ce qu'**au moins un raccord de fluide (44, 45) et au moins un raccord électrique (41) sont prévus au niveau de l'unité de couplage (39).

4. Élément de liaison selon l'une quelconque des revendications précédentes, **caractérisé en ce que** :
les raccords de fluide (32, 33 ; 44, 45) et les raccords électriques (35, 41) sont réalisés sous la forme de raccords de type fiche mâle et douille femelle ;
et/ou
respectivement au moins deux raccords de fluide (32, 33 ; 44, 45) associés l'un avec l'autre et/ou respectivement au moins un raccord électrique (35, 41) comportant au moins un pôle sont prévus au niveau de l'adaptateur de balai d'essuie-glace (4) et au niveau de l'unité de couplage (39).

5. Élément de liaison selon l'une quelconque des revendications précédentes, **caractérisé en ce que** le bras d'essuie-glace (1) est réalisé avec un logement (2) dans lequel l'adaptateur de balai d'essuie-glace (4) ou sa partie d'adaptateur (16) du côté de bras d'essuie-glace est fixé par introduction dans une direction d'insertion (A) et que l'unité de couplage (39) est disposée avec son au moins un raccord électrique (41) et avec son au moins un raccord de fluide (44, 45) de telle sorte dans le logement (2) que lors de l'introduction de l'adaptateur de balai d'essuie-glace (4) ou de la partie d'adaptateur (16) du côté de bras d'essuie-glace dans la direction d'insertion (A), la liaison entre l'au moins un raccord de fluide (32, 33) du côté d'adaptateur et l'au moins un raccord de fluide (44, 45) associé prévu au niveau de l'unité de couplage (39) ainsi que le raccord électrique (41) sont effectuées entre l'au moins un raccord électrique (35) du côté d'adaptateur et l'au moins un élément de liaison électrique prévu au niveau de l'unité de couplage (39).

6. Élément de liaison selon l'une quelconque des revendications précédentes, **caractérisé en ce que** le logement (2) comporte au niveau du bras d'essuie-glace une ouverture formée par exemple au niveau de l'extrémité libre du bras d'essuie-glace (1) pour introduire l'adaptateur de balai d'essuie-glace (4) ou la partie d'adaptateur (16) du côté de bras d'essuie-glace et que l'unité de couplage (39) est prévue au niveau du côté de ce logement (2) opposé à l'ouverture du logement (2).

7. Élément de liaison selon l'une quelconque des revendications précédentes, **caractérisé en ce que** l'au moins un raccord de fluide (32, 33) est relié, au niveau de la partie d'adaptateur (16) du côté de bras d'essuie-glace, via au moins un élément de liaison d'écoulement (34) réalisé au niveau de l'adaptateur de balai d'essuie-glace (4), à au moins un canal d'écoulement (25, 26) réalisé dans la partie d'adaptateur (17) du côté de balai d'essuie-glace reliée pour sa part à l'au moins une ouverture de buse (11.1, 12.1) ou à l'au moins un canal d'éjection (11, 12).

8. Élément de liaison selon la revendication 7, **caractérisé en ce que** respectivement au moins une ouverture de buse (11.1, 12.1) et ou au moins un canal d'éjection (11, 12) sont prévus au niveau des deux côtés longitudinaux de balai d'essuie-glace et que l'au moins une ouverture de buse (11.1, 12.1) et/ou le canal d'éjection (11, 12) respectif est relié, au niveau de chaque côté longitudinal, via un canal d'écoulement (25, 26) propre réalisé dans la partie d'adaptateur (17) du côté de balai d'essuie-glace et via un élément de liaison (34) propre interne à l'adaptateur, à un raccord de fluide (32, 33) propre, au niveau de la partie d'adaptateur (16) du côté de bras d'essuie-glace.

9. Élément de liaison selon la revendication 8, **caractérisé en ce que** la liaison fluide interne à l'adaptateur est formée par un tuyau flexible ou un bout de tuyau flexible (34).

10. Élément de liaison selon l'une quelconque des revendications précédentes, **caractérisé en ce qu'**au moins un raccord électrique (35) et/ou l'unité de couplage (39) sont fixés de façon flottante.

11. Élément de liaison selon l'une quelconque des revendications précédentes, **caractérisé en ce que** l'au moins un câble électrique (15) s'étend pour amener le flux chauffant au balai d'essuie-glace (3, 3a, 3b) et/ou que l'au moins une conduite de fluide (14) s'étend au moins sur une longueur partielle au niveau du bras d'essuie-glace (1).

12. Élément de liaison selon l'une quelconque des revendications précédentes, **caractérisé en ce que** l'au moins un câble électrique (15) s'étend au moins sur une longueur partielle à l'intérieur d'au moins une conduite de fluide (14) et est réalisé à cet endroit par exemple par un fil chauffant ou à résistance pour la formation d'un élément chauffant électrique.

13. Élément de liaison selon l'une quelconque des revendications précédentes, **caractérisé en ce que** l'unité de couplage (39) est maintenue de préférence par encliquetage au niveau d'une bride (46) prévue au niveau du bras d'essuie-glace (1) et fabriquée par exemple d'un seul tenant avec le bras d'essuie-glace (1).

14. Balai d'essuie-glace pour une installation d'essuyage de vitre dans des véhicules, avec un adaptateur de balai d'essuie-glace (4) prévu au niveau du balai d'essuie-glace (3, 3a, 3b) pour la fixation amovible du balai d'essuie-glace (3, 3a, 3b) à un bras d'essuie-glace (1), le balai d'essuie-glace (3, 3a, 3b) étant réalisé sous la forme d'un balai d'essuie-glace (3, 3a, 3b) plat et comportant au niveau d'au moins un côté longitudinal de balai d'essuie-glace au moins une ouverture de buse (11.1, 12.1) ou au moins un canal d'éjection ou de répartition (11, 12) avec des ouvertures de buse (11.1, 12.1) pour faire sortir un fluide de nettoyage ou de lavage sur une vitre de véhicule, ainsi qu'avec au moins un raccord de fluide (32, 33) du côté d'adaptateur, au niveau de l'adaptateur de balai d'essuie-glace (4), pour relier de façon amovible l'au moins une ouverture de buse (11.1, 12.1) ou l'au moins un canal d'éjection ou de répartition (11, 12) avec au moins une conduite de fluide (14) extérieure pour amener le fluide de lavage ou de nettoyage et notamment via une unité de couplage (39) pouvant être raccordée à l'au moins une conduite de fluide (14) et pouvant être reliée de façon amovible à l'adaptateur de balai d'essuie-glace (4), **caractérisé en ce que** le balai d'essuie-glace (3, 3a, 3b) est réalisé sous la forme d'un balai d'essuie-glace (3, 3a, 3b) électriquement chauffable, que l'adaptateur de balai d'essuie-glace (4) comporte en sus de l'au moins un raccord de fluide (32, 33) également au moins un raccord électrique (35) pour la liaison avec l'au moins un raccord électrique (41) du côté de bras d'essuie-glace et que l'adaptateur de balai d'essuie-glace (4) est réalisé au moins en deux parties.

15. Balai d'essuie-glace selon la revendication 14, **caractérisé en ce que** l'adaptateur de balai d'essuie-glace (4) comporte une partie d'adaptateur (16) du côté de bras d'essuie-glace pouvant être fixée de façon amovible au bras d'essuie-glace (1) et une partie d'adaptateur (17) du côté de balai d'essuie-glace pouvant être fixée au balai d'essuie-glace (3, 3a, 3b) et que l'au moins un raccord de fluide (32, 33) du côté d'adaptateur ainsi que l'au moins un raccord électrique (35) du côté d'adaptateur sont prévus au niveau de la partie d'adaptateur (16) du côté de bras d'essuie-glace.

16. Balai d'essuie-glace selon la revendication 14 ou 15, **caractérisé en ce que** :
l'au moins un raccord de fluide (32, 33) et/ou l'au moins un raccord électrique (35) sous réalisés sous la forme d'un raccord de type fiche mâle et douille femelle ; et/ou
au moins deux raccords de fluide (32, 33) et/ou respectivement au moins un raccord électrique (35) comportant au moins un pôle sont prévus au niveau de l'adaptateur de balai d'essuie-glace (4).

17. Balai d'essuie-glace selon l'une quelconque des revendications 14 à 16, **caractérisé en ce que** l'au moins un raccord de fluide (32, 33) est relié, au niveau de la partie d'adaptateur (16) du côté de bras d'essuie-glace, via au moins un élément de liaison d'écoulement (34) réalisé au niveau de l'adaptateur de balai d'essuie-glace (4), avec au moins un canal d'écoulement (25, 26) réalisé dans la partie d'adaptateur (17) du côté de balai d'essuie-glace reliée à son tour à l'au moins une ouverture de buse (11.1, 12.1) ou à l'au moins un canal d'éjection (11, 12).

18. Balai d'essuie-glace selon la revendication 17, **caractérisé en ce que** respectivement au moins une ouverture de buse (11.1, 12.1) et/ou au moins un canal d'éjection (11, 12) sont prévus au niveau des deux côtés longitudinaux de balai d'essuie-glace et que l'au moins une ouverture de buse (11.1, 12.1) et/ou le canal d'éjection (11, 12) respectif est relié, au niveau de chaque côté longitudinal, via un canal d'écoulement (25, 26) propre, réalisé dans la partie d'adaptateur (17) du côté de balai d'essuie-glace et un élément de liaison (34) interne à l'adaptateur propre, avec un raccord de fluide (32, 33) propre au niveau de la partie d'adaptateur (16) du côté de bras d'essuie-glace.

19. Balai d'essuie-glace selon la revendication 18, **caractérisé en ce que** la liaison fluide interne à l'adaptateur est formée par un tuyau flexible ou une partie de tuyau flexible (34).

20. Balai d'essuie-glace selon l'une quelconque des revendications 14 à 19, **caractérisé en ce que** l'au moins un raccord électrique (35) est fixé de façon flottante.
